# EUROPEAN PATENT APPLICATION

(11) **EP 3 006 332 A1**
(43) Date of publication of application: **13.04.2016**
(21) Application number: 14275213.8
(22) Date of filing: 08.10.2014
(51) Int. Cl.: B64C 25/50, H02K 7/116

(54) **Nose wheel steering**

(71) Applicant: Goodrich Actuation Systems Ltd., West Midlands B90 4LA (GB)
(72) Inventor: Hawksworth, Andrew Robert, Moreton, Nr. Newport, Shropshire TF10 9DS (GB)
(74) Representative: Leckey, David Herbert

(57) **Abstract**

A nose wheel steering mechanism (2) comprises a first, rotationally fixed nose wheel leg portion (6) and a second, rotatable nose wheel leg portion (10) arranged at least partially within and extending parallel to the first nose wheel leg portion (6). A toroidal electric motor (26) is mounted to and extends around the first nose wheel leg portion (8). Toroidal gearing (38) is mounted to and extends around the first nose wheel leg (6) and has an input (40) driven by the toroidal electric motor (26) and an output coupled to and driving the second nose wheel leg portion (10).

## Description

### TECHNICAL FIELD

The present disclosure relates to nose wheel steering of aircraft.

### BACKGROUND

Traditionally, aircraft are steered on the ground through the aircraft's nose wheel. This is achieved by applying a torque to a rotatable nose wheel leg from a motor mounted to a fixed part of the nose wheel assembly. Typically the motor is mounted to one side of, and parallel to, the axis of the rotatable steerable leg, and the torque is transmitted to the leg by means of a rack and pinion arrangement. An example of such an arrangement is disclosed in GB-A-2511856.

Whilst this steering arrangement operates satisfactorily, it is desirable to find alternative mechanisms for nose wheel steering.

### SUMMARY

Disclosed herein is a nose wheel steering mechanism comprising:
a first, rotationally fixed nose wheel leg portion;
a second, rotatable nose wheel leg portion arranged at least partially within and extending parallel to the first nose wheel leg portion;
an annular electric motor mounted to and extending around the first nose wheel leg portion; and
annular gearing mounted to and extending around the first nose wheel leg portion and having an input driven by the annular electric motor and an output coupled to and driving the second nose wheel leg portion.

Thus the disclosed steering mechanism uses an annular or toroidal drive motor and toroidal gearing to drive the rotatable nose wheel leg portion rather than an offset motor and rack and pinion arrangement. The annular motor and annular gearing are arranged around the first nose wheel leg portion. In embodiments of the disclosure this may lead to reduced space requirements for the steering motor and gearing.

In embodiments, the annular gearing is epicyclical gearing.

In one embodiment, the output of the epicyclical gearing comprises a plurality of planetary gears which are coupled to drive an annular output element coupled to the second nose wheel leg portion.

The annular output element may be provided with drive elements, e.g. splines, for engagement with drive elements, e.g. splines, provided on the second nose wheel leg portion, more particularly on an outer circumference of the second nose wheel leg portion. This arrangement may have the advantage compared to a traditional arrangement, that the torque loads transmitted into the second nose wheel leg portion are spread over a number of interfaces provided by multiple planetary gears and also over multiple interfaces (splines) between the drive element and the second nose wheel leg portion, rather than a single interface as with a rack and pinion. This may mean that a smaller and lighter gearbox may be used.

Depending on the torque required to rotate the second nose wheel portion, and the rotational speed required, the gearing may comprise compound epicyclical gearing.

The gearing may be multi-stage, with, for example a first step down stage providing an input to a second step down stage.

### BRIEF DESCRIPTION OF DRAWINGS

The above and other aspects of the disclosure will now be described, by way of example only, with reference to the accompanying drawing in which:
Figure 1 shows a schematic part-cutaway, vertical cross section of an embodiment of a nose wheel steering system; and
Figure 2 shows a partial horizontal cross section through the embodiment of Figure 1 along the line II-II of Figure 1;

### DETAILED DESCRIPTION

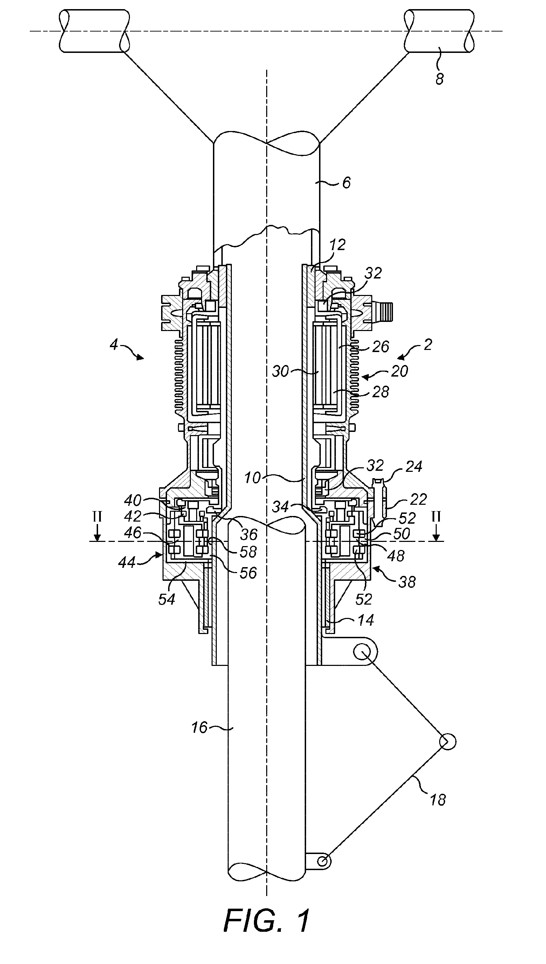

With reference to Figure 1, a vertical nose wheel 2 of an aircraft is illustrated schematically.

The nose wheel 2 comprises a nose wheel leg 4 having a first, rotationally fixed leg portion 6 which is connected to a pivot 8 at its upper end, about which pivot 8 the nose wheel 2 may be rotated for deployment from the aircraft. By "rotationally fixed" as used herein is meant that the first leg portion 6 is not rotatable about its longitudinal axis A.

The nose wheel leg 4 further comprises a second, rotatable leg portion 10 which is received partially within the first leg portion 6 and supported for rotation with respect to the first leg portion 6 about the common axis A by means of upper and lower bearings 12, 14.

A third leg portion 16 is telescopically received within the second leg portion 10 and is rotationally coupled thereto by a linkage 18, illustrated schematically. One or more nose wheels (not shown) are mounted at the lower end of the third leg portion 16, in a conventional manner.

The first leg portion 6 is provided with an annular (toroidal) motor housing 20 and an annular (toroidal) gearbox housing 22 which is joined to the motor housing 20 by a plurality of fasteners 24.

The annular motor housing 20 mounts an annular (toroidal) electric motor 26 which extends around the periphery of the first leg portion 6. The annular electric motor 26 comprises an annular stator 28 which is fixedly mounted in the annular motor housing 20 and an annular, tubular rotor 30 which is mounted for rotation about the axis A relative to the stator 28 through upper and lower rotor bearings 32.

The lower end 34 of the rotor 30 is provided with an annular gear wheel 36, as will be described further below.

The gearbox housing 22 houses annular (toroidal) epicyclical gearing 38, illustrated schematically. The gearing 38 has a first, step down epicyclical input stage 40 in meshing engagement with the gear wheel 36 of the rotor 30. This first stage 40 comprises a plurality of first stage compound planetary gears 42 having differing numbers of teeth on the input side than on the output side to effect a first speed reduction.

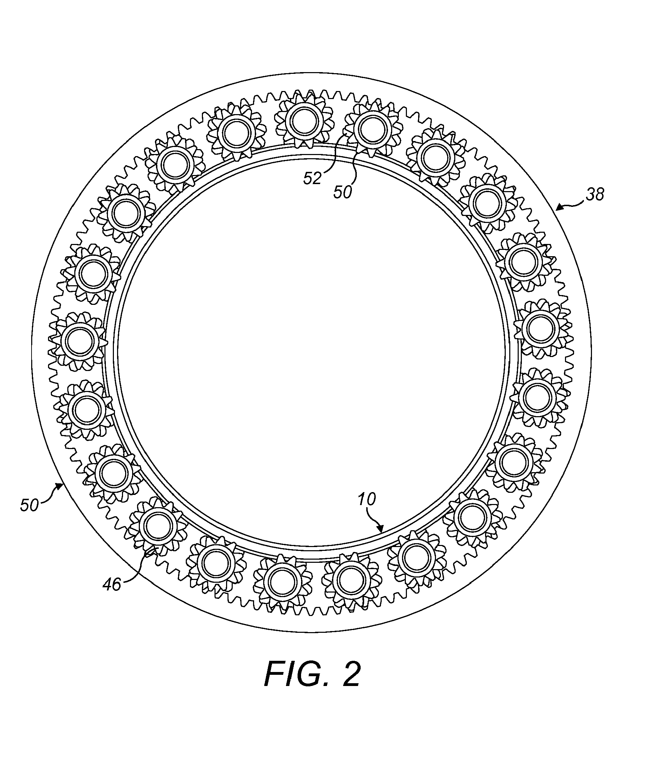

The output of the first stage 40 drives a second, step down epicyclical output stage 44. The second stage 44 comprises a plurality of second stage compound planetary gear wheels 46, whose layout can best be appreciated from Figure 2.

The second stage compound planetary gears 46 comprise three sets of teeth, namely a central set 48 which mesh with a ring gear 50 mounted fixedly in the gearbox housing 22 and a pair of outer sets 52 having the same number of teeth as each other but a lower number of teeth than the gears 46 of the central set 48. The outer sets 52 are appropriately coupled to an annular output element 54 which is provided on its inner circumference 56 with a plurality of splines which engage a plurality of splines on the outer circumference 58 of the second leg portion 10.

The number of planetary gears used in the first and second stages, and the ratio of gear teeth on the gears of each stage will be determined by the particular installation, for example the size of the installation and the speed reduction (and corresponding torque increase) required to drive the second wheel portion 10 at an appropriate speed.

Operation of the system will now be described.

When steering of the nose wheel 2 is required, the motor 26 is energised. This causes rotation of the motor rotor 30 relative to the motor stator 26 and thereby relative to the first leg portion 6. This rotation is transmitted to the epicyclical gearing 38 through the drive gear 36.

The gearing 38 reduces the rotational speed of the motor 22 and increases the torque correspondingly and transmits that torque to the second leg portion 10 through the splined engagement between the annular drive element 54 and the second leg portion 10. This rotation is transmitted to the third leg portion 16 which mounts the nose wheel(s) through the linkage 18.

The use of an annular (toroidal) drive motor and annular (toroidal) gearing in the embodiment above may lead to a more compact steering arrangement, leading to reduced space requirements for the steering motor and gearing. Moreover, using epicyclical gearing with a plurality of planetary gears coupled to the rotatable nose wheel leg portion may have the advantage, compared to a traditional arrangement, that the torque loads transmitted into the rotatable nose wheel leg portion are spread over a number of interfaces, rather than being concentrated at a single interface. This may again mean that a smaller and lighter gearbox may be used.

As discussed above, the number of planetary gears used will depend on the particular application. As will be appreciated from Figure 2, as the aircraft leg diameter increases, more torque may be required to drive the leg. However, because of the increase in diameter, more planetary gears may be arranged around the leg, which will distribute and share the load proportionately.

It will also be appreciated that the gearing 38 illustrated is purely exemplary and that other gearing may be used. For example, it may be possible to use single stage gearing or non-compound gearing depending on the speed reduction/ torque increase required. What is important is that the gearing is toroidal and extends around the nose wheel leg.

## Claims

1. A nose wheel steering mechanism comprising:
a first, rotationally fixed nose wheel leg portion;
a second, rotatable nose wheel leg portion arranged at least partially within and extending parallel to the first nose wheel leg portion;
a toroidal electric motor mounted to and extending around the first nose wheel leg portion; and
toroidal gearing mounted to and extending around the first nose wheel leg and
having an input driven by the toroidal electric motor and an output coupled to and driving the second nose wheel leg portion.

2. The nose wheel steering mechanism as claimed in claim 1, wherein the toroidal gearing is epicyclical gearing.

3. The nose wheel steering mechanism as claimed in claim 2, wherein the output of the epicyclical gearing comprises a plurality of planetary gears which are coupled to an annular output element coupled to the second nose wheel leg portion.

4. The nose wheel steering mechanism as claimed in claim 3, wherein the annular output element comprises a plurality of drive elements on its inner circumference.

5. The nose wheel steering mechanism as claimed in claim 4, wherein a plurality of drive elements are provided on an outer circumference of the second nose wheel leg portion for engagement with the drive elements of the annular output element.

6. The nose wheel steering mechanism as claimed in claim 4 or 5, wherein the drive elements are splines.

7. The nose wheel steering mechanism as claimed in any preceding claim, wherein the gearing is multi-stage.

8. The nose wheel steering mechanism as claimed in any preceding claim, wherein the gearing is compound gearing.
